# EUROPEAN PATENT APPLICATION

(11) **EP 4 060 862 A1**
(43) Date of publication of application: **21.09.2022**
(21) Application number: 20888162.3
(22) Date of filing: 13.11.2020
(51) Int. Cl.: H02J 50/00

(54) **WIRELESS CHARGE RECEIVING APPARATUS, TRANSMISSION APPARATUS, AND WIRELESS CHARGING SYSTEM**

(30) Priority: 14.11.2019 CN 201911115703
(71) Applicant: GUANGDONG OPPO MOBILE TELECOMMUNICATIONS CORP., LTD., Dongguan, Guangdong 523860 (CN)
(72) Inventor: YANG, Jun, Dongguan, Guangdong 523860 (CN)
(74) Representative: Penza, Giancarlo
(86) International application number: PCT/CN2020/128507
(87) International publication number: WO 2021/093828

(57) **Abstract**

A wireless charge receiving apparatus, a transmission apparatus, and a wireless charging system, pertaining to the technical field of wireless charging. The receiving apparatus comprises at least two receiving circuits (S), and each of the receiving circuits (S) is connected to a battery (D) of the receiving apparatus and comprises a receiving coil (101). The receiving coil (101) is used to receive an alternating magnetic field transmitted by a wireless charging transmission apparatus, and output, while being driven by the alternating magnetic field, electrical energy to charge the battery (D). While the receiving apparatus is being wirelessly charged by the transmission apparatus, the at least two receiving coils (101) comprised by the receiving apparatus are capable of being aligned with at least two transmission coils (201) of the transmission apparatus in a one-to-one correspondence. The invention increases the charging power for wireless charging.

## Description

### TECHNICAL FIELD

The disclosure relates to the field of wireless charging technologies, and particularly to a receiving device and a transmitting device for wireless charging, and a wireless charging system.

### BACKGROUND

Wireless charging is a technology that transmits, through a magnetic field, electrical power from a charging device to an electronic device to-be-charged, without connecting the devices through a wire. The wireless charging has been applied to the electronic device to-be-charged, such as mobile phones, electric cars, and wearable devices.

The wireless charging is subject to the charging power thereof, and how to improve the charging power of wireless charging has become an urgent problem to be solved.

### SUMMARY

In view of this, embodiments of the disclosure provide a receiving device and a transmitting device for wireless charging, and a wireless charging system, so as to improve the charging power of wireless charging.

In a first aspect, a receiving device for wireless charging is provided. The receiving device includes at least two receiving circuits, each of the at least two receiving circuits is connected to a battery of the receiving device, and each of the at least two receiving circuits includes a receiving coil. The receiving coil is configured to generate, when being driven by an alternating magnetic field generated by a transmitting device for wireless charging, electric power and charge the battery. While performing wireless charging by the transmitting device, the at least two receiving coils of the receiving device are configured to align at least two corresponding transmitting coils of the transmitting device, respectively.

In a second aspect, a transmitting device for wireless charging is provided. The transmitting device includes at least two transmitting circuits, where each of the at least two receiving circuits includes a transmitting coil, and the transmitting coil is configured to generate, when being applied with an alternating current, an alternating magnetic field. While performing wireless charging for a receiving device, the at least two transmitting coils of the transmitting device are configured to align at least two corresponding receiving coils of the receiving device, respectively.

In a third aspect, a wireless charging system is provided. The wireless charging system includes a receiving device and a transmitting device. The receiving device includes at least two receiving circuits, each of the at least two receiving circuits is connected to a battery of the receiving device. Each of the at least two receiving circuits includes a receiving coil, and the receiving coil is configured to generate, when being driven by an alternating magnetic field generated by a transmitting device for wireless charging, electric power and charge the battery. The transmitting device includes at least two transmitting circuits, each of the at least two receiving circuits includes a transmitting coil, and the transmitting coil is configured to generate, when being applied with an alternating current, the alternating magnetic field. While performing wireless charging by the transmitting device, the at least two receiving coils of the receiving device are configured to align the at least two corresponding transmitting coils of the transmitting device, respectively.

The embodiment of the disclosure achieves at least beneficial effects as follows. The receiving device is provided with at least two receiving circuits, each of the at least two receiving circuits is connected to a battery of the receiving device, and each of the at least two receiving circuits includes a receiving coil. The receiving coil is configured to output, when being driven by an alternating magnetic field generated by a transmitting device for wireless charging, electric power to charge the battery of the receiving device. In addition, when the receiving device performs wireless charging through the transmitting device, the at least two receiving coils of the receiving device may be aligned in a one-to-one correspondence with at least two transmitting coils of the transmitting device. In this way, the receiving device can use the at least two receiving circuits simultaneously to charge the battery. As such, the overall charging power can be significantly improved without changing the charging power of each of the receiving circuits significantly.

### BRIEF DESCRIPTION OF THE DRAWINGS

FIG. 1 is a structural schematic diagram illustrating a receiving device provided by the embodiments of the disclosure;
FIG. 2 is a schematic diagram illustrating a central axis of a coil;
FIG. 3 is another structural schematic diagram illustrating a receiving device provided by the embodiments of the disclosure;
FIG. 4 is yet another structural schematic diagram illustrating a receiving device provided by the embodiments of the disclosure;
FIG. 5 is still another structural schematic diagram illustrating a receiving device provided by the embodiments of the disclosure;
FIG. 6 is still yet another structural schematic diagram illustrating a receiving device provided by the embodiments of the disclosure;
FIG. 7 is still yet another structural schematic diagram illustrating a receiving device provided by the embodiments of the disclosure;
FIG. 8 is still yet another structural schematic diagram illustrating a receiving device provided by the embodiments of the disclosure;
FIG. 9 is still yet another structural schematic diagram illustrating a receiving device provided by the embodiments of the disclosure;
FIG. 10 is still yet another structural schematic diagram illustrating a receiving device provided by the embodiments of the disclosure;
FIG. 11 is still yet another structural schematic diagram illustrating a receiving device provided by the embodiments of the disclosure;
FIG. 12 is still yet another structural schematic diagram illustrating a receiving device provided by the embodiments of the disclosure;
FIG. 13 is still yet another structural schematic diagram illustrating a receiving device provided by the embodiments of the disclosure;
FIG. 14 is still yet another structural schematic diagram illustrating a receiving device provided by the embodiments of the disclosure;
FIG. 15 is still yet another structural schematic diagram illustrating a receiving device provided by the embodiments of the disclosure;
FIG. 16 is a structural schematic diagram illustrating a transmitting device provided by the embodiments of the disclosure;
FIG. 17 is another structural schematic diagram illustrating a transmitting device and a receiving device provided by the embodiments of the disclosure;
FIG. 18 is yet another structural schematic diagram illustrating a transmitting device provided by the embodiments of the disclosure;
FIG. 19 is still another structural schematic diagram illustrating a transmitting device provided by the embodiments of the disclosure;
FIG. 20 is still yet another structural schematic diagram illustrating a transmitting device provided by the embodiments of the disclosure;
FIG. 21 is still yet another structural schematic diagram illustrating a transmitting device provided by the embodiments of the disclosure;
FIG. 22 is still yet another structural schematic diagram illustrating a transmitting device provided by the embodiments of the disclosure;
FIG. 23 is still yet another structural schematic diagram illustrating a transmitting device provided by the embodiments of the disclosure;
FIG. 24 is still yet another structural schematic diagram illustrating a transmitting device provided by the embodiments of the disclosure;
FIG. 25 is still yet another structural schematic diagram illustrating a transmitting device provided by the embodiments of the disclosure; and
FIG. 26 is still yet another structural schematic diagram illustrating a transmitting device provided by the embodiments of the disclosure.

### DETAILED DESCRIPTION OF PREFERRED EMBODIMENTS

In order to more clearly illustrate the objects, the technical solutions and the advantages of the disclosure, the embodiments of the disclosure will be described in detail below in conjunction with the drawings.

The wireless charging is a technology that enables the electronic device to-be-charged to be charged without a wire connection. Currently, there are mainly the following four types of wireless charging technologies: electromagnetic induction type, magnetic resonance type, electric field coupling type and radio wave type. The electromagnetic induction type wireless charging technology is relatively mature, and is the mainstream wireless charging technology currently adopted.

Regarding the electromagnetic induction type wireless charging technology, the charging device may be provided with a coil, and the coil generates, when being applied with an alternating current, an alternating magnetic field. In addition, the electronic device to-be-charged may also be provided with a coil, and the coil of the electronic device to-be-charged can induce a current when being driven by the alternating magnetic field, so that the battery of the electronic device to-be-charged can be charged with the induced current.

Currently, the charging power of wireless charging has become a bottleneck restricting the wireless charging, for reasons as follows. From a perspective of limiting the heat generated by the coil, the current on the coil cannot be large. From another perspective of restrictions of integrated circuit (IC) process and the cost thereof, the voltage cannot be high. Because neither the current nor the voltage can be continuously increased, it is difficult to further improve the charging power of wireless charging.

In view of this, the embodiments of the disclosure provide a receiving device and a transmitting device for wireless charging, and a wireless charging system, by which the charging power of wireless charging can be improved in the case where both the current and the voltage cannot be continuously increased.

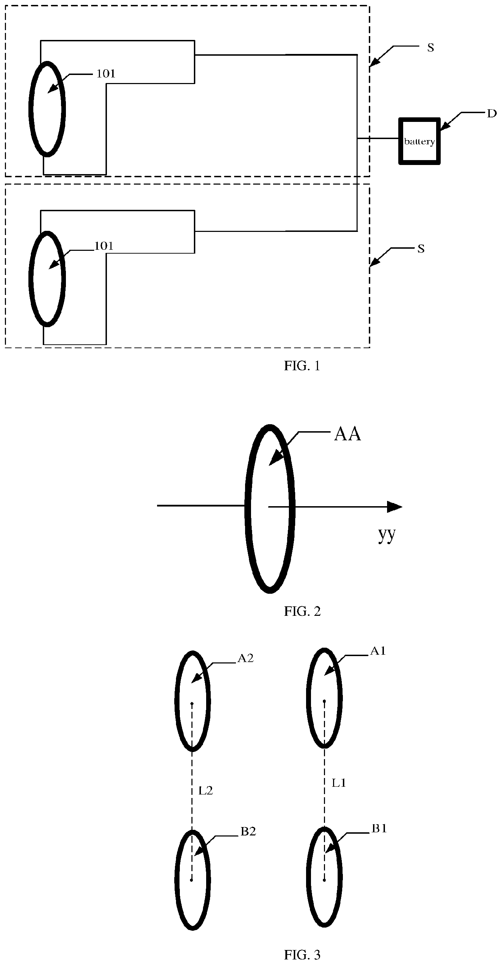

Referring to FIG. 1, a structural schematic diagram illustrating a receiving device for wireless charging provided by the embodiments of the disclosure is illustrated. The receiving device for wireless charging refers to the electronic device to-be-charged. In practice, the receiving device may be an electronic device that requires charging the battery thereof, such as a mobile phone, a tablet computer, a wearable device, and an e-book.

As illustrated in FIG. 1, the receiving device includes at least two receiving circuits S (all the drawings in the disclosure just exemplarily illustrate two receiving circuits S). All of the at least two receiving circuits S are connected to a battery D of the receiving device.

Each of the at least two receiving circuits S includes a receiving coil 101. The receiving coil 101 is configured to receive an electromagnetic signal radiated by an alternating magnetic field generated by a transmitting device for wireless charging, and output, based on the electromagnetic signal, electric power to charge the battery of the receiving device. It should be noted that, the transmitting device for wireless charging refers to the charging device, that is, a device supplying power to the electronic device to-be-charged (the receiving device) in the wireless charging process. For example, the transmitting device may be a wireless charging dock.

Furthermore, when the receiving device performs wireless charging through the transmitting device, the at least two receiving coils of the receiving device may be aligned in a one-to-one correspondence with at least two transmitting coils of the transmitting device.

In the embodiments of the disclosure, the transmitting device matching the receiving device may include at least two transmitting coils. Each of the at least two transmitting coils of the transmitting device corresponds to a respective one of the at least two receiving coils 101 of the receiving device. In the wireless charging process, the at least two receiving coils 101 of the receiving device can be aligned in a one-to-one correspondence with the at least two transmitting coils of the transmitting device. In other words, in the wireless charging process, each of the at least two transmitting coils can be aligned with its corresponding receiving coil (also referred to as mutual alignment). In this way, the receiving device can perform the wireless charging, through all the at least two receiving coils and their corresponding at least two transmitting coils. In other words, the receiving device can charge the battery thereof by simultaneously using the at least two receiving coils provided in the receiving device.

The receiving device for wireless charging is provided with at least two receiving circuits. Each of the at least two receiving circuits is connected to the battery of the receiving device, and each of the at least two receiving circuits includes a receiving coil. The receiving coil is configured to generate, when being driven by the alternating magnetic field generated by the transmitting device for wireless charging, electric power, so as to charge the battery of the receiving device. In addition, when the receiving device performs wireless charging through the transmitting device, the at least two receiving coils of the receiving device may be aligned in a one-to-one correspondence with the at least two transmitting coils of the transmitting device. In this way, the receiving device can use the at least two receiving circuits at the same time to charge the battery, thereby significantly improving the total charging power without significantly changing the charging power of each of the receiving circuits.

Optionally, in the embodiments of the disclosure, for every two receiving coils of the receiving device, a distance between two central axes of the two receiving coils is equal to a distance between two central axes of two transmitting coils respectively corresponding to the two receiving coils.

It should be noted that, the coil usually refers to a wire winding in a loop shape. A symmetry axis of the wire winding refers to the central axis of the coil, which is perpendicular to the plane where the loop shape presented by the wire winding is located. Referring to FIG. 2, the central axis yy of the coil AA is illustrated. As illustrated in FIG. 2, the central axis yy is the symmetry axis of the coil AA, and the central axis yy is perpendicular to the plane where the loop shape presented by the wire winding AA is located.

Referring to FIG. 3, two receiving coils of the receiving device are exemplarily illustrated, and the two receiving coils include a receiving coil A1 and a receiving coil B1. FIG. 3 further exemplarily illustrates two transmitting coils of the transmitting device, and the two transmitting coils include a transmitting coil A2 and a transmitting coil B2. The receiving coil A1 corresponds to the transmitting coil A2, the receiving coil B1 corresponds to the transmitting coil B2, and a distance L1 between a central axis of the receiving coil A1 and a central axis of the receiving coil B1 is equal to a distance L2 between a central axis of the transmitting coil A2 and a central axis of the transmitting coil B2.

For every two receiving coils of the receiving device, a distance between two central axes of the two receiving coils is equal to a distance between two central axes of two transmitting coils respectively corresponding to the two receiving coils. In this way, in the wireless charging process, the central axis of each of the receiving coils can be coincided with the central axis of the transmitting coil corresponding to the receiving coil. As such, an efficiency of transferring power from the transmitting device to the receiving device can be improved, and the heat generated by the at least two transmitting coils and the at least two receiving coils can be reduced.

Optionally, in the embodiments of the disclosure, the at least two receiving coils of the receiving device include a central receiving coil. The central receiving coil is disposed at a center position of the receiving device. In the embodiments of the disclosure, with regard to the expression "the central receiving coil is disposed at a center position of the receiving device", it means that a central axis of the central receiving coil passes through a central position of a rear cover of the receiving device. In practice, for the receiving device provided with a display screen, the rear cover may refer to a back shell surface of the receiving device opposite to the display screen; and for the receiving device without a display screen, the rear cover may refer to any shell surface of the receiving device. In addition, in the embodiments of the disclosure, the plane where the loop shape presented by the receiving coil is located may be parallel to the plane where the rear cover is located. The provision of the central receiving coil on the receiving device facilitates the receiving device to be compatible with currently existing transmitting devices of single coil.

Optionally, in the embodiments of the disclosure, the receiving circuit where the central receiving coil is located supports Qi standard. The Qi standard is a wireless charging standard with two characteristics of convenience and universality, which is developed by the Wireless Power Consortium (WPC), the first standard organization in the world that advocates the wireless charging technology.

Optionally, in the embodiments of the disclosure, the at least two receiving coils of the receiving device further include an off-center receiving coil, where no position on a central axis of the off-center receiving coil coincides with the central position of the rear cover. In other words, the off-center receiving coil is not disposed at the center of the receiving device, but is disposed at an off-center position on the receiving device.

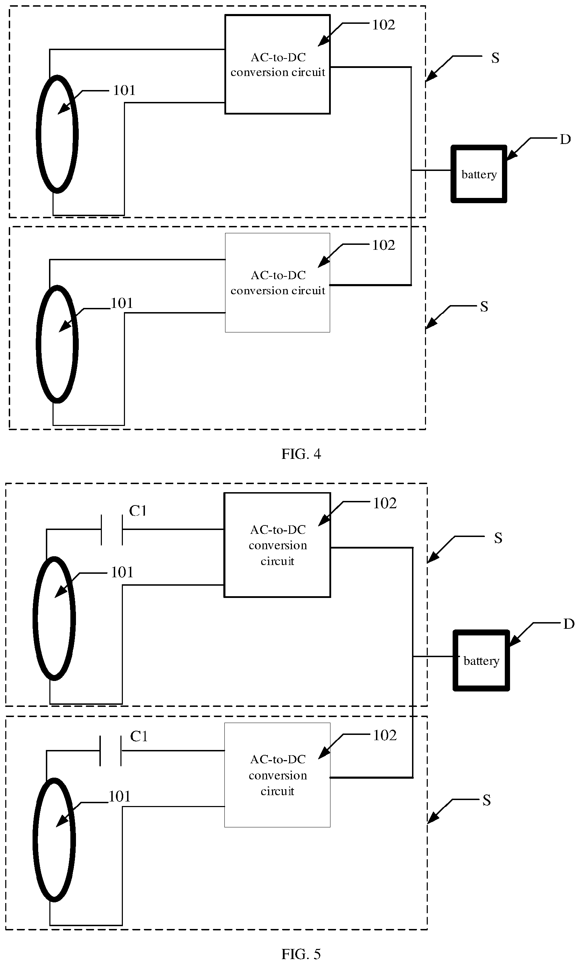

Referring to FIG. 4, in the embodiments of the disclosure, each receiving circuit S of the receiving device further includes an AC-to-DC conversion circuit 102. The AC-to-DC conversion circuit 102 of each receiving circuit S is connected to the respective receiving coil 101 of the same receiving circuit.

With regard to the expression "the receiving coil 101 is configured to generate, when being driven by the alternating magnetic field, electric power", it may mean that: the receiving coil 101 is configured to output, when being driven by the alternating magnetic field, an alternating current, and the AC-to-DC conversion circuit 102 is configured to convert the alternating current output by the receiving coil 101 connected with the AC-to-DC conversion circuit 102 into a direct current, so as to charge the battery D of the receiving device with the direct current.

Referring to FIG. 5, in some optional embodiments of the disclosure, each receiving circuit S may further include a capacitor C. For each of the at circuit S, the capacitor C of the receiving circuit S may be connected between the receiving coil 101 and the AC-to-DC conversion circuit 102 of the receiving circuit S. The capacitor C1 and the receiving coil 101 of the receiving circuit S may compose a resonance circuit.

Optionally, for each receiving circuit S, the receiving coil 101 of the receiving circuit S is connected to one terminal of the capacitor C1 of the receiving circuit S and an input terminal of the AC-to-DC conversion circuit 102 of the receiving circuit S, and the other terminal of the capacitor C1 of the receiving circuit S is connected to the input terminal of the AC-to-DC conversion circuit 102 of the receiving circuit S.

In the embodiments of the disclosure, the receiving device may be provided with a voltage conversion module, and the voltage conversion module may be connected between the battery and the at least two receiving circuits S. Optionally, the voltage conversion module may be connected to the AC-to-DC conversion circuit 102 of the receiving circuit S, and is disposed between the AC-to-DC conversion circuit 102 and the battery D. In this way, the AC-to-DC conversion circuit 102 can convert the alternating current output by the receiving coil 101 connected to the AC-to-DC conversion circuit 102 into the direct current, and output the direct current to the voltage conversion module connected to the AC-to-DC conversion circuit 102, so as to charge the battery D through the voltage conversion module. The voltage conversion module is configured to convert a charging voltage and/or a charging current output by the at least two receiving circuits S, and charge the battery D with the converted charging voltage and/or the converted charging current.

Optionally, in some embodiments of the disclosure, the voltage conversion module described above may include a first voltage conversion module and a second voltage conversion module.

The first voltage conversion module is connected between the battery D and each of the at least two receiving circuits S of the receiving device. The first voltage conversion module is configured to convert the charging voltage and/or the charging current output by each receiving circuit connected with the first voltage conversion module, and charge the battery D with the converted charging voltage and/or the converted charging current.

Optionally, the first voltage conversion module may be a DC-to-DC voltage conversion module. The DC-to-DC voltage conversion module may be a buck-type voltage conversion module, a charge-pump-type (capable of bucking and boosting) voltage conversion module, or a boost-type voltage conversion module.

The second voltage conversion module is connected between the battery D and a part of the at least two receiving circuits S of the receiving device. For example, the second voltage conversion module is connected between the battery D and one of the at least two receiving circuits S of the receiving device. The second voltage conversion module is configured to convert the charging voltage and/or the charging current output by each receiving circuit connected with the second voltage conversion module, and charge the battery D with the converted charging voltage and/or the converted charging current.

Optionally, in the embodiments of the disclosure, the second voltage conversion module may be implemented as a main charger IC.

It should be noted that, the embodiments of the disclosure provide two implementations for providing the first voltage conversion module, which will be described below in detail.

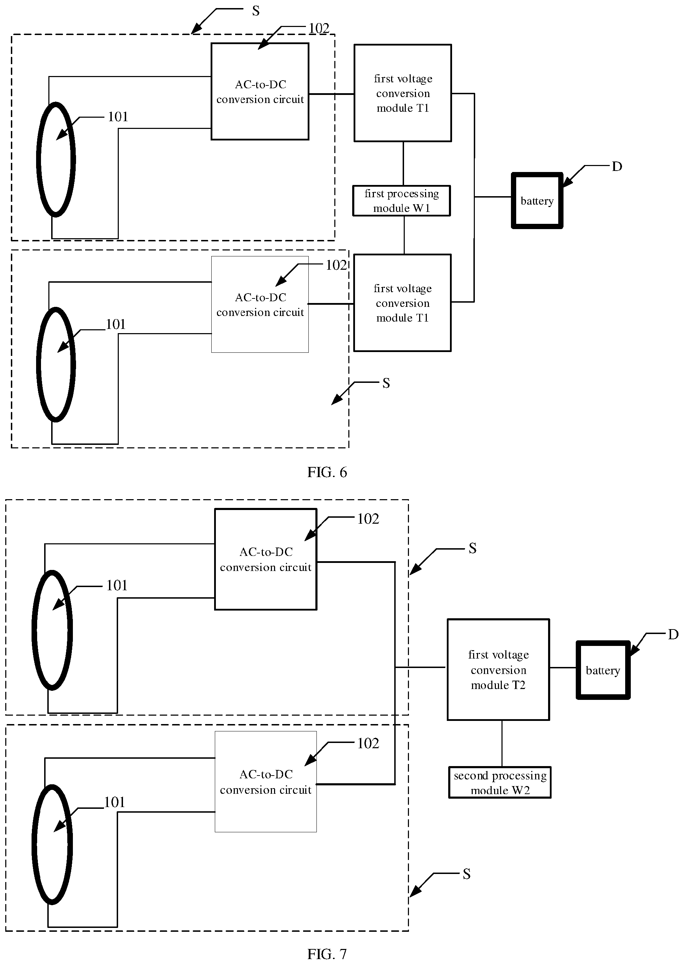

Referring to FIG.6, in the first implementation, at least two first voltage conversion modules T1 are provided in the receiving device. The at least two first voltage conversion modules T1 may be in a one-to-one correspondence with the at least two receiving circuits S of the receiving device, where each of the at least two first voltage conversion modules T1 is connected between the respective receiving circuit S and the battery D.

Optionally, as illustrated in FIG. 6, the receiving device may further include a first processing module W1, the first processing module W1 is connected to each of the first voltage conversion modules T1 of the receiving device, and the first processing module W1 is configured to control each of the first voltage conversion modules T1 to convert the charging voltage and/or the charging current output by the receiving circuit connected with the first voltage conversion module T1. The first processing module W1 may be a microcontroller unit (MCU) or an application processing (AP) module of the receiving device.

Referring to FIG. 7, in the second implementation, one first voltage conversion module T2 is provided in the receiving device. The first voltage conversion modules T2 may be connected between the battery D of the receiving device and each of the at least two receiving circuits S.

Optionally, as illustrated in FIG. 7, the receiving device may further include a second processing module W2 connected to the second voltage conversion module T2. The second processing module W2 is configured to control the second voltage conversion module T2 to convert the charging voltage and/or the charging current output by each receiving circuit connected with the second voltage conversion module T2. Similar to the first processing module W1, the second processing module W2 may be implemented as a MCU or an AP.

Similar to the two implementations for providing the first voltage conversion module, the second voltage conversion module may also be provided in two implementations. In the first implementation, each of the part of the at least two receiving circuits may be provided with a respective second voltage conversion module, with each second voltage conversion module provided between one of the part of the at least two receiving circuits and the battery D. In the second implementation, the receiving device may be provided with one second voltage conversion module, and the second voltage conversion module may be provided between the battery D and each of the part of the at least two receiving circuits.

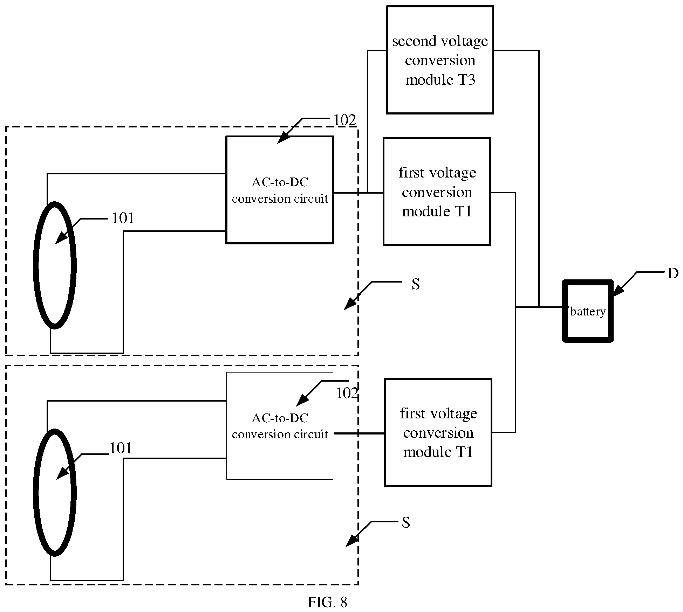

Referring to FIG. 8, a schematic diagram illustrating the provision of the first voltage conversion module and the second voltage conversion module in the receiving device in a case where the first voltage conversion module is provided in its first implementation. As illustrated in FIG. 8, the second voltage conversion module T3 may be connected between one of the at least two receiving circuits (the part of the at least two receiving circuit) and the battery D.

The charging process of the receiving device may include one or more of a trickle charging phase, a constant current charging phase and a constant voltage charging phase. The trickle charging phase refers to a protective pre-charging phase for charging the battery when the voltage of the battery is less than a boot voltage. The trickle charging phase may end, in response to determining that the voltage of the battery reaches the boot voltage. In general, the charging current during the trickle charge phase is small. The constant current charging phase generally follows the trickle charge phase. In the constant current charging phase, the battery is usually charged with a constant charging current, and the charging current during the constant current charging phase is large. The constant current charging phase may end in response to detecting the voltage of the battery reaches a cut-off voltage. The battery is charged in the constant voltage charging phase, in response to determining that the constant current charging phase ends. During the constant voltage charging phase, the battery is generally charged with a constant charging voltage, and the charging current gradually decreases as the charging time increases. The constant voltage charging phase ends, in response to detecting that the charging current is reduced to a cut-off current.

Various charging phases require different charging voltages and charging currents. In view of this, in order to ensure that the receiving device can be properly charged during the various charging phases, in some optional embodiments of the disclosure, the receiving device may further include a control circuit (not illustrated in the drawings). The control circuit is configured to control, in the constant current charging phase, all of the at least two receiving circuits S of the receiving device to charge the battery D thereof, and control, in the trickle charging phase and/or the constant voltage charging phase, a part of the at least two receiving circuits S of the receiving device to charge the battery D thereof.

Optionally, the control circuit is configured to control, in the constant current charging phase, the first voltage conversion module to convert the charging voltage and/or the charging current output by each receiving circuit connected with the first voltage conversion module. In addition, the control circuit is configured to charge the battery D with the converted charging voltage and/or the converted charging current.

The control circuit is further configured to control, in the trickle charging phase and/or the constant voltage charging phase, the second voltage conversion module to convert the charging voltage and/or the charging current output by each receiving circuit connected with the second voltage conversion module. In addition, the control circuit is configured to charge the battery D with the converted charging voltage and/or the converted charging current.

In practice, the DC-to-DC voltage conversion module (i.e., the first voltage conversion module in the embodiments of the disclosure) can only convert the voltage and/or the current according to a fixed ratio, which is not flexible. However, the charging voltage and the charging voltage are required to be flexibly changed to charge the battery in the trickle charging phase and the constant voltage charging phase, which cannot be achieved by the DC-to-DC voltage conversion module. Thus, in the embodiments of the disclosure, a second voltage conversion module (i.e., a main charging control module) may be provided in the receiving device. As such, the second voltage conversion module F is configured to convert the charging voltage and/or the charging current in the trickle charging phase and the constant voltage charging phase for charging the battery D, and charging the battery D with the converted charging voltage and/or the converted charging current.

In the embodiments of the disclosure, the receiving device may be provided with a reception-side communication circuit, which is configured to send charging control data to the transmitting device. Optionally, the reception-side communication circuit is configured to modulate and encode the charging control data, and send, with the receiving coil 101, the modulated and encoded charging control data to the transmitting device. The charging control data may include at least one of an output voltage and an output current of the receiving circuit. Alternatively, the charging control data includes one of boost control data and buck control data. The charging control data is configured to instruct the transmitting device to adjust, based on the charging control data, the transmit power for charging. The embodiments of the disclosure provide two exemplary implementations for providing the reception-side communication circuit in the receiving device.

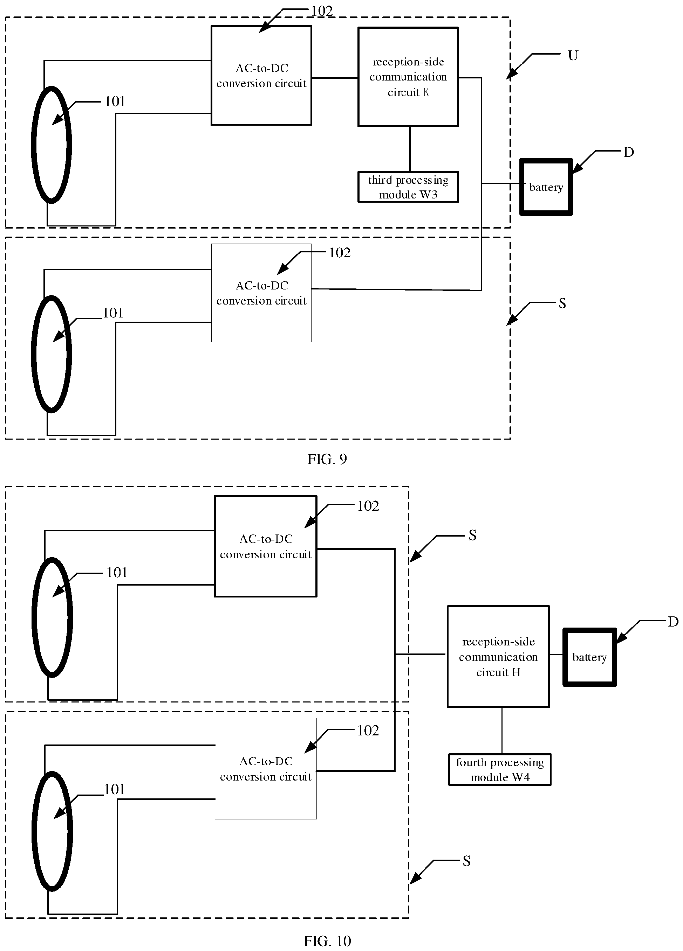

Referring to FIG. 9, in the first implementation, at least one of the at least two receiving circuits S in the receiving device may be configured for a communication receiving circuit U (only one communication receiving circuit U is exemplarily illustrated in FIG. 9). In the embodiments of the disclosure, the communication receiving circuit U is provided therein with a reception-side communication circuit K, which is connected to the receiving coil 101 of the communication receiving circuit U. Optionally, as illustrated in FIG. 7, the reception-side communication circuit K is connected, through the AC-to-DC conversion circuit 102 of the communication receiving circuit U, to the receiving coil 101 of the communication receiving circuit U. The reception-side communication circuit K is configured to modulate and encode the charging control data, and send, with the receiving coil 101 of the communication receiving circuit U, the modulated and encoded charging control data to the transmitting device.

As illustrated in FIG. 9, in some optional embodiments of the disclosure, the receiving device may further include a third processing module W3. The third processing module is configured to send the charging control data to the reception-side communication circuit K.

Similar to the first processing module W1 and the second processing module W2, the third processing module W3 may be implemented as a MCU or an AP. In practice, the third processing module W3 and the first processing module W1 may be implemented as a same one processing module. Alternatively, the third processing module W3 and the second processing module W2 may be implemented as a same one processing module.

Referring to FIG. 10, in the second implementation, the receiving device may be provided with a reception-side communication circuit H, which is connected to the receiving coil 101 of at least one of the at least two receiving circuits S (FIG. 10 exemplarily illustrates that the reception-side communication circuit H is connected with the receiving coil 101 of each of the at least two receiving circuits S). Optionally, as illustrated in FIG. 10, the reception-side communication circuit H may be connected to the receiving coil 101 through the AC-to-DC conversion circuit 102. The reception-side communication circuit H is configured to modulate and encode the charging control data, and send, with the receiving coil 101 connected to the reception-side communication circuit H, the modulated and encoded charging control data to the transmitting device.

As illustrated in FIG. 10, in some optional embodiments of the disclosure, the receiving device may further include a fourth processing module W4. The fourth processing module W4 is configured to send the charging control data to the reception-side communication circuit H.

Similar to the first processing module W1, the second processing module W2, and the third processing module W3, the fourth processing module W4 may be implemented as a MCU or an AP. In practice, the fourth processing module W4 and the first processing module W1 may be implemented as a same one processing module. Alternatively, the fourth processing module W4 and the second processing module W2 may implemented as a same one processing module.

In the embodiments of the disclosure, the receiving device may be provided with a conversion-circuit-controlled circuit. The conversion-circuit-controlled circuit is configured to control the AC-to-DC conversion circuit 102. For example, the conversion-circuit-controlled circuit is configured to control the switching tube of the AC-to-DC conversion circuit 102. The embodiments of the disclosure provide two exemplary implementations for providing the conversion-circuit-controlled circuit in the receiving device.

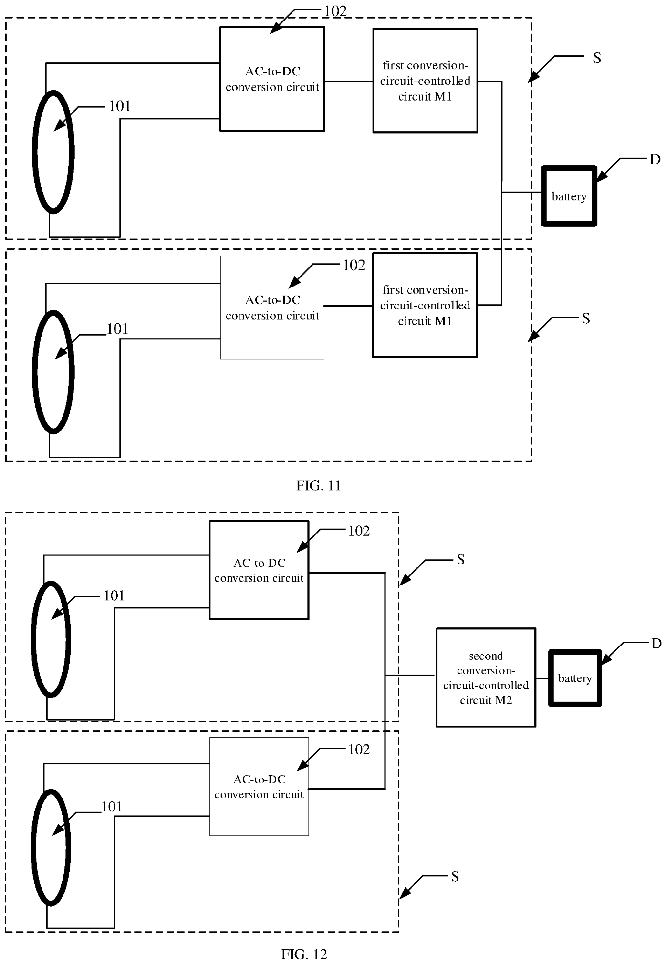

Referring to FIG. 11, in the first implementation, each receiving circuit S may be provided with a first conversion-circuit-controlled circuit M1. For each receiving circuit S, the AC-to-DC conversion circuit 102 of the receiving circuit S is connected to the first conversion-circuit-controlled circuit M1 of the receiving circuit S, and the first conversion-circuit-controlled circuit M1 is configured to control the AC-to-DC conversion circuit 102 of the receiving circuit S.

Referring to FIG. 12, in the second implementation, the receiving device may be provided with a second conversion-circuit-controlled circuit M2, which is connected to the AC-to-DC conversion circuit 102 of each receiving circuit S. The second conversion-circuit-controlled circuit M2 is configured to control the AC-to-DC conversion circuit 102 of each receiving circuit S.

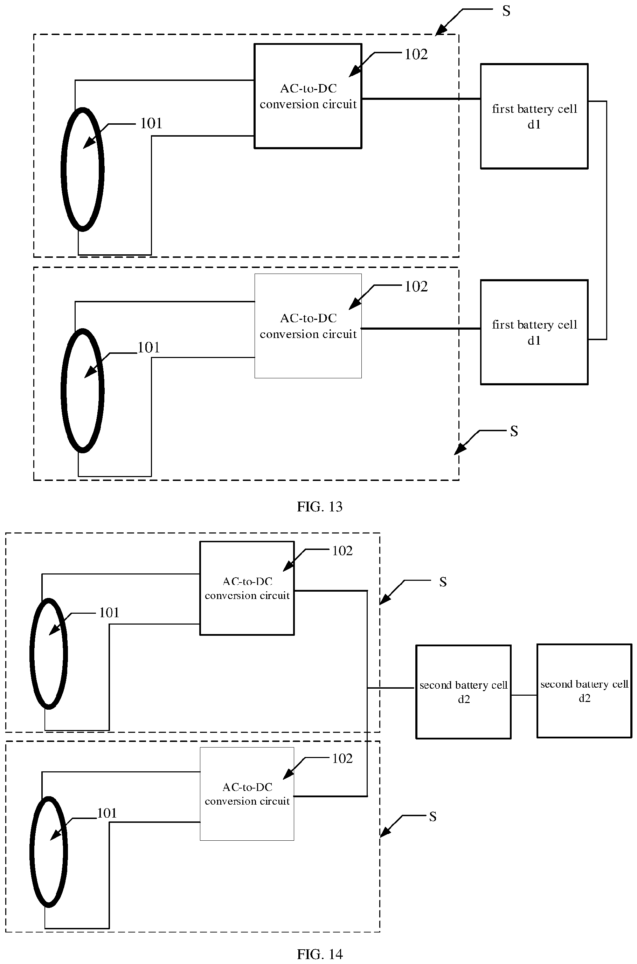

Referring to FIG. 13, in some optional embodiments of the disclosure, the battery D of the receiving device may include at least two first battery cells d1 connected in parallel (two first battery cells d1 connected in parallel are exemplarily illustrated in FIG. 13), and each receiving circuit S is connected to at least one of the first battery cells d1 of the receiving device (FIG. 13 exemplarily illustrates that each receiving circuit S is connected to one of the first battery cells d1 of the receiving device).

Referring to FIG. 14, the battery D of the receiving device includes at least two second battery cells d2 connected in series (two second battery cells d2 connected in series are exemplarily illustrated in FIG. 14), and each receiving circuit S is connected to the at least two second battery cells d2 connected in series.

It should be noted that the above-mentioned circuit structures illustrated in FIG. 1 to FIG. 14 may be arbitrarily combined to form other receiving circuits or other receiving devices, which fall within the protection scope of the embodiments of disclosure.

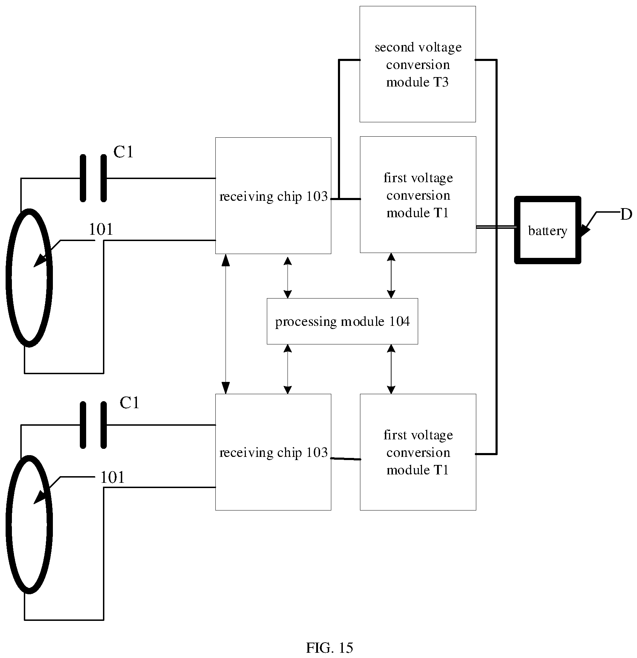

Referring to FIG. 15, a structural schematic diagram illustrates an exemplary receiving device formed by combining some circuit structures in FIG. 1 to FIG. 14.

As illustrated in FIG. 15, the receiving device includes a receiving coil 101, a capacitor C1, a receiving chip 103, a processing module 104, a first voltage conversion module T1, a second voltage conversion module T3, and a battery D.

The receiving chip 103 includes the AC-to-DC conversion circuit, the reception-side communication circuit, and the conversion-circuit-controlled circuit mentioned above. The processing module 104 is configured to control the first voltage conversion module to convert the charging voltage and/or the charging current output by the receiving circuit connected to the first voltage conversion module. In addition, the processing module 104 is also configured to send the charging control data to the reception-side communication circuit of the receiving chip 103. Furthermore, the processing module 104 is further configured to control the conversion-circuit-controlled circuit of the receiving chip 103 to control the AC-to-DC conversion circuit of the receiving chip 103.

It should be noted that, though it is not illustrated in FIG. 15, the receiving device may further include the above-mentioned control circuit. Optionally, the control circuit may be integrated in the processing module 104.

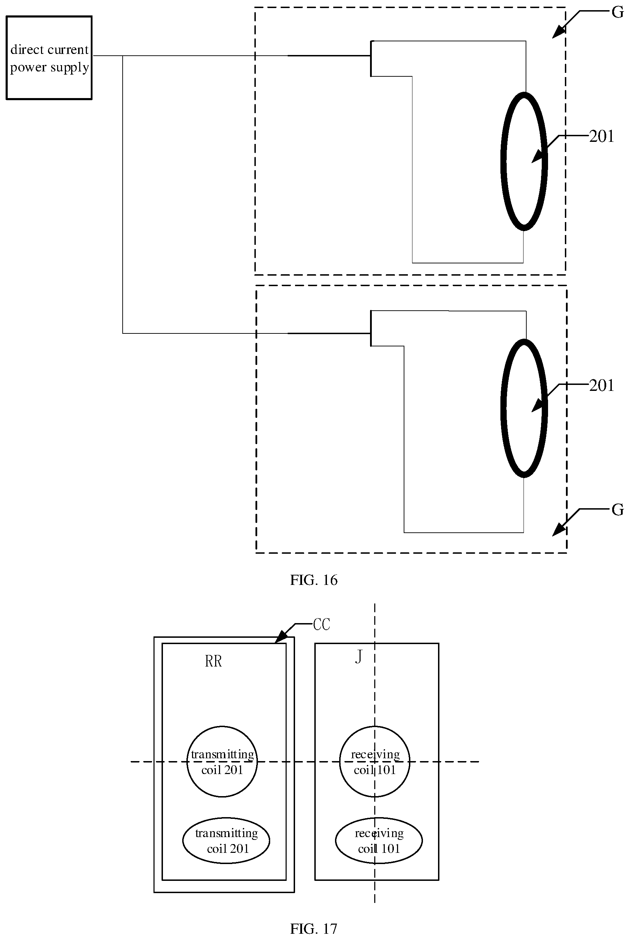

Referring to FIG. 16, a structural schematic diagram illustrating a transmitting device for wireless charging provided by the embodiments of the disclosure is illustrated. As illustrated in FIG.15, the transmitting device may include at least two transmitting circuits G (all the drawings in the disclosure just exemplarily illustrate two transmitting circuits G). Each of the at least two receiving circuits G includes a transmitting coil 201, and the transmitting coil 201 is configured to generate, when being applied with an alternating current, an alternating magnetic field.

In addition, when the transmitting device performs wireless charging for the receiving device, the at least two transmitting coils 201 of the transmitting device can be aligned in a one-to-one correspondence with the at least two receiving coils of the receiving device.

In the embodiments of the disclosure, the receiving device matching the transmitting device includes at least two receiving coils. Each of the at least two receiving coils of the receiving device corresponds to a respective one of the at least two transmitting coils 201 of the transmitting device. When the transmitting device performs the wireless charging for the receiving device, the at least two transmitting coils 201 of the transmitting device can be aligned in a one-to-one correspondence with the at least two receiving coils of the receiving device. In this way, in the wireless charging process, each of the at least two receiving coils can be aligned with its corresponding transmitting coil. As such, the transmitting device can perform the wireless charging for the receiving device, through all the at least two transmitting coils and their corresponding at least two receiving coils.

The at least two transmitting circuits are provided in the transmitting device for wireless charging. Each of the at least two receiving circuits includes the transmitting coil, and the transmitting coil is configured to generate, when being applied with the alternating current, the alternating magnetic field. In addition, when the transmitting device performs wireless charging for the receiving device, the at least two transmitting coils of the transmitting device can be aligned in a one-to-one correspondence with the at least two receiving coils of the receiving device. In this way, the transmitting device can use the at least two transmitting circuits at the same time to perform wireless charging for the receiving device, thereby significantly improving the total charging power without significantly changing the charging power of each of the transmitting circuits.

Optionally, in the embodiments of the disclosure, for every two transmitting coils of the transmitting device, a distance between two central axes of the two transmitting coils is equal to a distance between two central axes of two receiving coils respectively corresponding to the two transmitting coils.

For every two transmitting coils of the transmitting device, a distance between two central axes of the two transmitting coils is equal to a distance between two central axes of two receiving coils respectively corresponding to the two transmitting coils. In this way, in the wireless charging process, the central axis of each of the transmitting coils can be coincided with the central axis of the respective receiving coil corresponding to the transmitting coil. As such, an efficiency of transferring power from the transmitting device to the receiving device can be improved, and the heat generated by the at least two transmitting coils and the at least two receiving coils can be reduced.

Optionally, in the embodiments of the disclosure, the transmitting device includes a clamping member. The clamping member is configured to clamp the receiving device. When the receiving device is clamped on the transmitting device through the clamping member, for each of the at least two transmitting coils of the transmitting device, a central axis of the transmitting coil is coincident with a central axis of a respective receiving coil of the receiving device corresponding to the transmitting coil.

Optionally, in the embodiments of the disclosure, the clamping member is in a groove-like structure or in a structure having a protrusion for position limiting.

Referring to FIG. 17, a schematic diagram illustrating a transmitting device and a receiving device provided by the disclosure, in the case where the clamping member is in the groove-like structure. As illustrated in FIG. 17, a groove-like structure CC of the transmitting device RR is capable of exactly accommodating the receiving device J in the wireless charging process.

In addition, for any side wall surface of the groove-like structure CC and any one of the at least two transmitting circuits 201, a distance between the side wall surface and the central axis of the transmitting circuit 201 is equal to the distance between a side surface of the back shell corresponding to the side wall surface and the central axis of the receiving coil 102 corresponding to the transmitting coil 201 in the receiving device J.

In this way, when the receiving device J is accommodated in the groove-like structure CC, for each transmitting coil 201 of the transmitting device RR, the central axis of the transmitting coil 201 is coincident with the central axis of the receiving coil 102 corresponding to the transmitting coil 201 in the receiving device J.

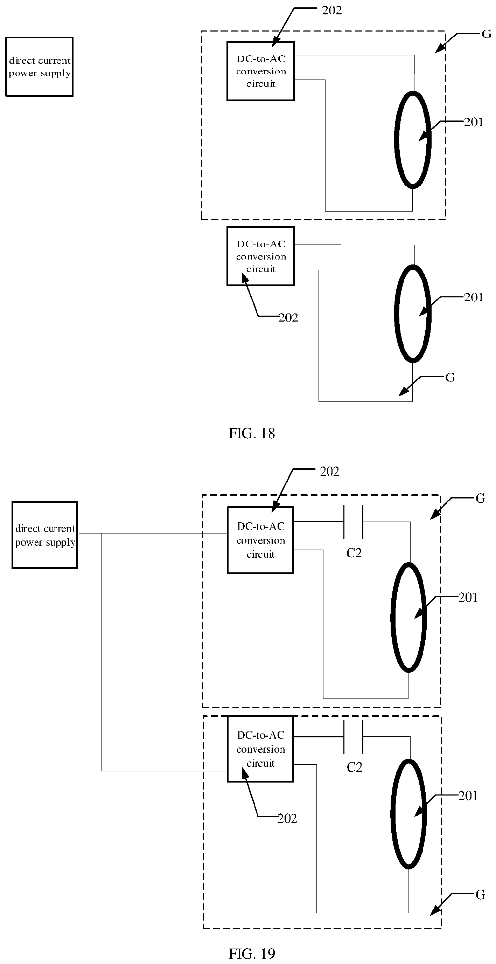

Referring to FIG. 18, in some optional embodiments of the disclosure, each transmitting circuit G further includes a DC-to-AC conversion circuit 202. The DC-to-AC conversion circuit 202 of each transmitting circuit G is connected to the transmitting coil 201 of the transmitting circuit G.

The DC-to-AC conversion circuit 202 is configured to convert the direct current output by the direct current power supply into the alternating current, and output the alternating current to the transmitting coil 201 connected to the DC-to-AC conversion circuit 202.

Optionally, an input terminal of the DC-to-AC conversion circuit 202 may be connected to a power adapter (i.e., a DC power supply), where the power adapter can convert the alternating current into the direct current; and an output terminal of the DC-to-AC conversion circuit 202 may be connected to the transmitting coil 201. Optionally, in practice, the DC-to-AC conversion circuit 202 may include a reverse bridge rectifier.

Referring to FIG. 19, in the optional embodiments of the disclosure, each transmitting circuit G may include a capacitor C2, which may be connected between the transmitting coil 201 and the DC-to-AC conversion circuit 202 of the transmitting circuit G. The capacitor C2 and the transmitting coil 201 of the transmitting circuit G may compose a resonance circuit.

Optionally, for each transmitting circuit G, the transmitting coil 201 of the transmitting circuit G is respectively connected to one terminal of the capacitor C2 of the transmitting circuit G and an output terminal of the DC-to-AC conversion circuit 202 of the transmitting circuit G, and the other terminal of the capacitor C2 of the transmitting circuit G is connected to the output terminal of the DC-to-AC conversion circuit 202 of the transmitting circuit G.

In the embodiments of the disclosure, the transmitting device may be provided with a voltage conversion module, and the voltage conversion module is configured to convert a voltage of the direct current output by the direct current power supply, and output the converted direct current into the DC-to-AC conversion circuit 202. The embodiments of the disclosure provide two exemplary implementations for providing the voltage conversion module in the transmitting device.

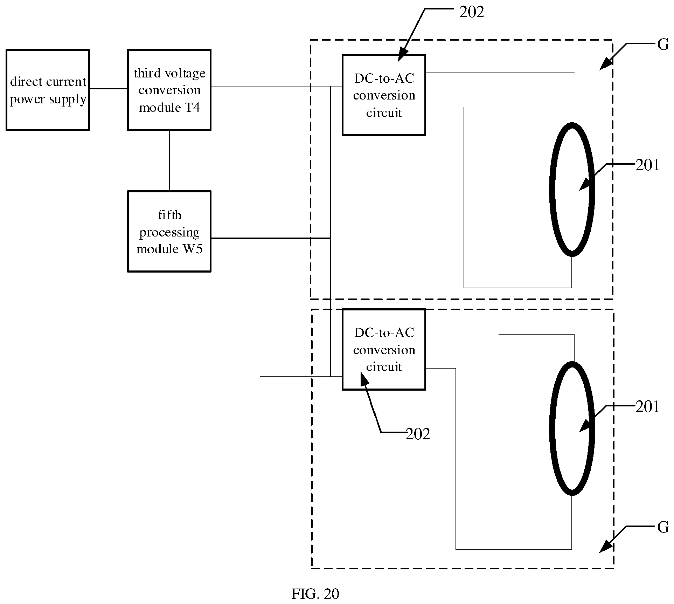

Referring to FIG. 20, in the first implementation, the transmitting device may be provided with a third conversion module T4. The third voltage conversion module T4 is connected to the DC-to-AC conversion circuit 202 of each transmitting circuit G. The third voltage conversion module T4 is configured to convert a voltage of the direct current output by the direct current power supply, and output the converted direct current to the DC-to-AC conversion circuit 202 of each transmitting circuit G.

Optionally, the third voltage conversion module T4 is connected to an input terminal of the DC-AC conversion circuit 202 of each transmitting circuit G.

The third voltage conversion module T4 is implemented as a DC-to-DC voltage conversion module, which may be a boost-type voltage conversion module.

Optionally, as illustrated in FIG. 20, the transmitting device may be further provided with a fifth processing module W5. The third voltage conversion module W5 is connected to the third voltage conversion module T4 and the DC-to-AC conversion circuit 202 of each transmitting circuit G. The fifth processing module W5 may be implemented as a MCU. The fifth processing module W5 is configured to control, based on charging control data sent from the receiving device, at least one of an output voltage of the third voltage conversion module T4, a duty cycle of the DC-to-AC conversion circuit 202, and an oscillation frequency of the transmitting coil 201.

The transmit power for charging of the transmitting device may be controlled through controlling at least one of the output voltage of the third voltage conversion module T4, the duty cycle of the DC-to-AC conversion circuit 202, and the oscillation frequency of the transmitting coil 201.

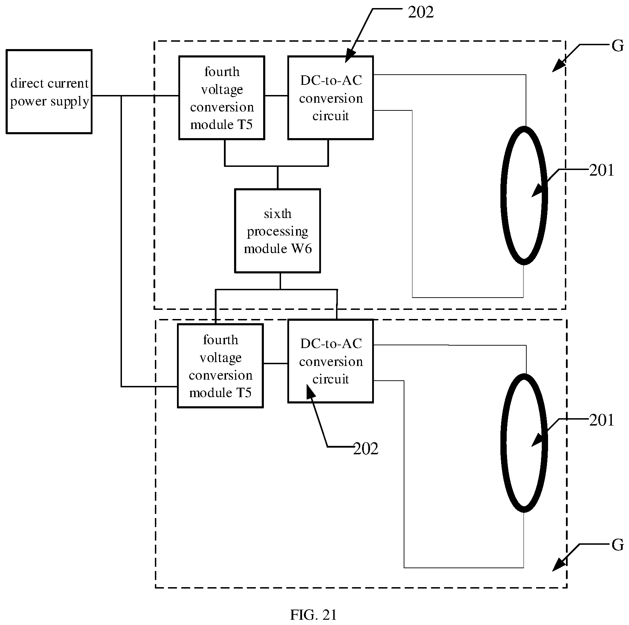

Referring to FIG. 21, in the second implementation, each transmitting circuit G may be provided with a fourth voltage conversion module T5. The fourth voltage conversion module T5 of each transmitting circuit G is connected to the DC-to-AC conversion circuit 202 of the transmitting circuit G.

Each of the fourth voltage conversion modules T5 is configured to convert the voltage of the direct current output by the direct current power supply, and output the converted direct current to the DC-to-AC conversion circuit 202 connected with the fourth voltage conversion module T5.

Optionally, for each transmitting circuit G, the fourth voltage conversion module T5 of the transmitting circuit G is connected to the input terminal of the DC-to-AC conversion circuit 202 of the transmitting circuit G.

The fourth voltage conversion module T5 may be implemented as a DC-to-DC voltage conversion module. The DC-to-DC voltage conversion module may be a boost-type voltage conversion module.

Optionally, as illustrated in FIG. 21, the transmitting device may be further provided with a sixth processing module W6. The sixth processing module W6 is connected to each of the fourth voltage conversion modules T5 and to the DC-to-AC conversion circuit 202 of each transmitting circuit G. The sixth processing module W6 may be implemented as a MCU. The sixth processing module W6 is configured to control, based on the charging control data sent from the receiving device, at least one of an output voltage of the fourth voltage conversion module T5, a duty cycle of the DC-to-AC conversion circuit 202, and an oscillation frequency of the transmitting coil 201, thereby controlling the transmit power of the transmitting device.

In the embodiments of the disclosure, the transmitting device may be provided with a transmission-side communication circuit, the transmission-side communication circuit is configured to receive charging control data sent from the receiving device. Optionally, the transmission-side communication circuit is configured to demodulate and decode the charging control data sent from the receiving device. The charging control data may include at least one of the output voltage and the output current of the receiving circuit. Alternatively, the charging control data may include one of boost control data and buck control data. The embodiments of the disclosure provide two exemplary implementations for providing the transmission-side communication circuit in the transmitting device.

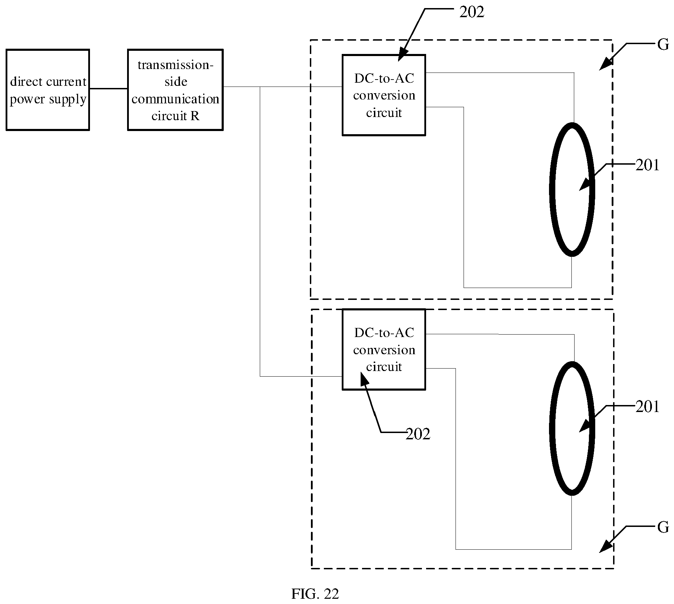

Referring to FIG. 22, in the first implementation, the transmitting device may be provided with a transmission-side communication circuit R. The transmission-side communication circuit R is connected to the transmitting circuit 201 of each transmitting circuit G. Optionally, as illustrated in FIG. 20, the transmission-side communication circuit R may be connected, through the DC-to-AC conversion circuit 202 of each transmitting circuit G, to the transmitting coil 201 of each transmitting circuit 201. The transmission-side communication circuit R is configured to obtain the charging control data received by the transmitting circuit 201, and to demodulate and decode the charging control data.

In the embodiments of the disclosure, the transmission-side communication circuit R may be connected to the fifth processing module W5 or the sixth processing module W6, and send the charging control data to the fifth processing module W5 or the sixth processing module W6.

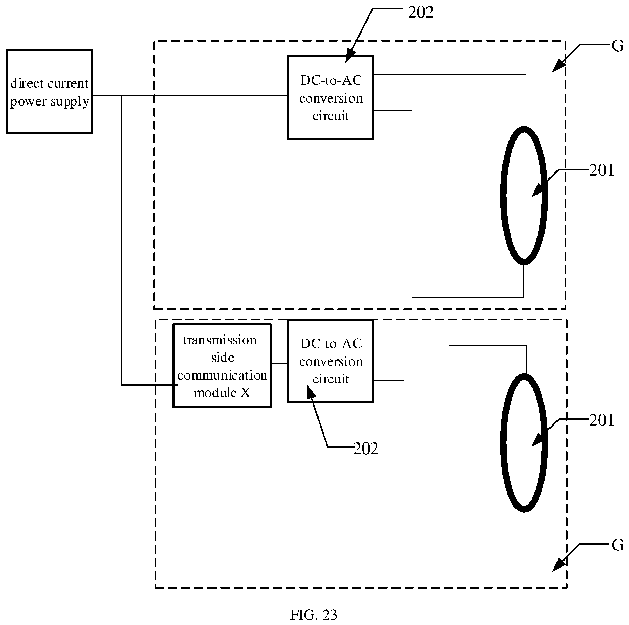

Referring to FIG. 23, in the second implementation, a transmission-side communication circuit X is provided in at least one of the at least two transmitting circuits G of the transmitting device (FIG. 21 illustrates that one transmitting circuit G is provided with the transmission-side communication circuit X). For the transmitting circuit G provided with the transmission-side communication circuit X, the transmission-side communication circuit X of the transmitting circuit G is connected to the transmitting coil 201 of the transmitting circuit G. Optionally, as illustrated in FIG. 21, the transmission-side communication circuit X of the transmitting circuit G may be connected, through the DC-to-AC conversion circuit 202 of the transmitting circuit G, to the transmitting coil 201 of the transmitting circuit G. The transmission-side communication circuit X is configured to obtain the charging control data received by the transmitting coil connected to itself, and to demodulate and decode the charging control data.

In the embodiment of the disclosure, the transmission-side communication circuit X may be connected to the fifth processing module W5 or the sixth processing module W6, and send the charging control data to the fifth processing module W5 or the sixth processing module W6.

In the embodiments of the disclosure, the transmitting device may be provided with a transmission-side control circuit, which is configured to control, under the instruction of the fifth processing module W5 or the sixth processing module W6, at least one of the duty cycle of the DC-to-AC conversion circuit 202 and the oscillation frequency of the transmitting coil 201. The embodiments of the disclosure provide two exemplary implementations for providing the transmission-side control circuit in the transmitting device.

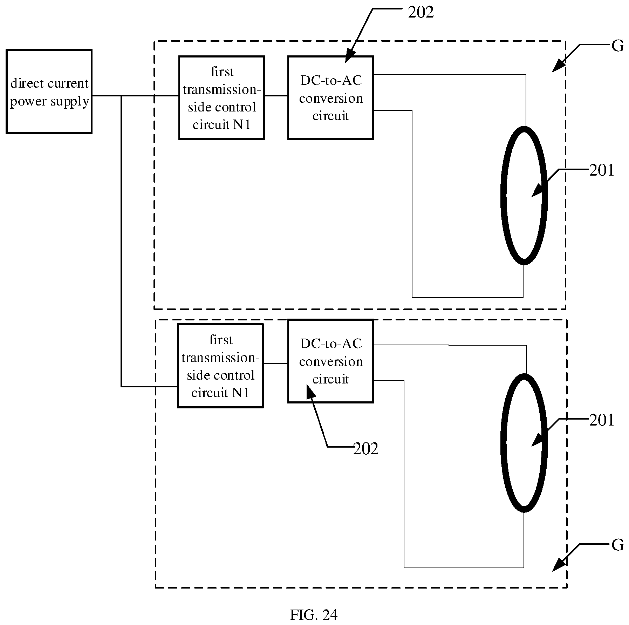

Referring to FIG. 24, in the first implementation, each transmitting circuit G may be provided with a first transmission-side control circuit N1. For each transmitting circuit G, the DC-to-AC conversion circuit 202 of the transmitting circuit G is connected to the first transmission-side control circuit N1 of the transmitting circuit G. The first transmission-side control circuit N1 of the transmitting circuit G is configured to control at least one of the duty cycle of the DC-to-AC conversion circuit 202 of the transmitting circuit G and the oscillation frequency of the transmitting coil 201.

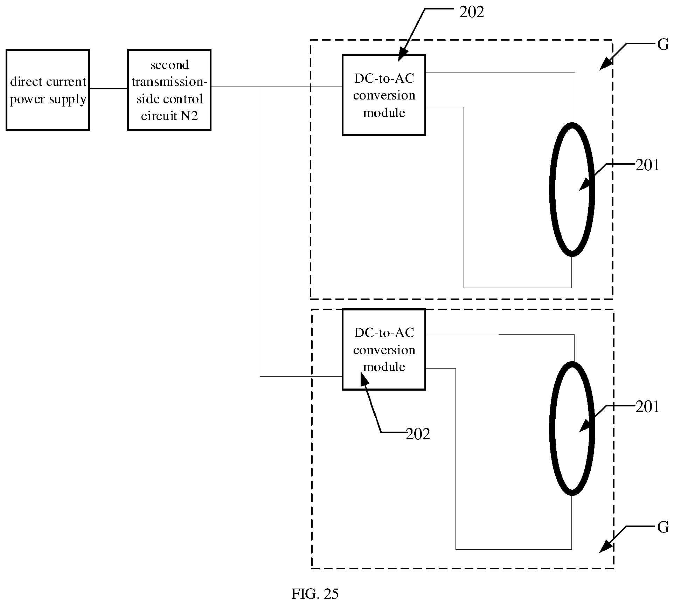

Referring to FIG. 25, in the second implementation, the terminal device may be provided with a second transmission-side control circuit N2. The second transmission-side control circuit N2 is connected to the DC-to-AC conversion circuit 202 of each transmitting circuit G of the transmitting device. The second transmission-side control circuit N2 is configured to control at least one of the duty cycle of the DC-to-AC conversion circuit 202 of each transmitting circuit G and the oscillation frequency of the transmitting coil 201.

It should be noted that the above-mentioned circuit structures illustrated in FIG. 16 to FIG. 25 may be arbitrarily combined to form other transmitting circuits or other transmitting devices, which fall within the protection scope of the embodiments of disclosure.

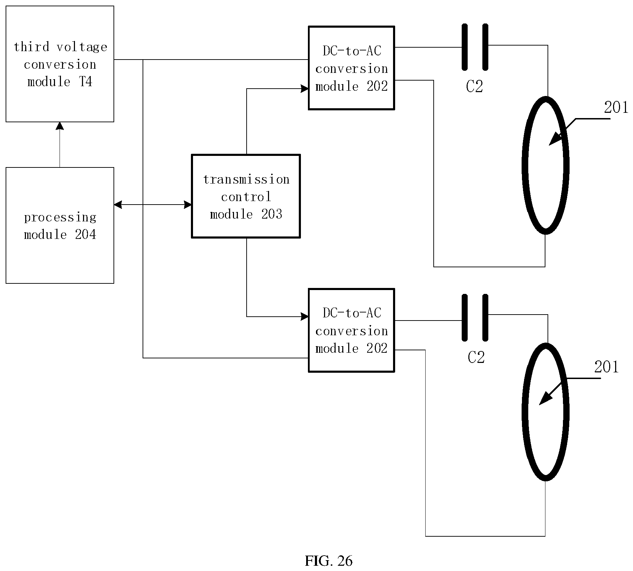

Referring to FIG. 26, a structural schematic diagram illustrates an exemplary transmitting device formed by combining some circuit structures in FIG. 16 to FIG. 25.

As illustrated in FIG. 26, the transmitting device includes a transmitting coil 201, a capacitor C2, a DC-to-AC conversion circuit 202, a transmission control module 203, a processing module 204, and a third voltage conversion module T4.

The transmission control module 203 include the above-mentioned transmission-side communication circuit and the transmission-side control circuit. The processing module 204 is configured to control, based on the charging control data sent by the receiving device, at least one of the output voltage of the third voltage conversion module T4, the duty cycle of the DC-to-AC conversion circuit 202 and the oscillation frequency of the transmitting coil 201, by which the transmit power of the transmitting device is controlled.

The embodiments of the disclosure further provide a wireless charging system. The wireless charging system includes the receiving device described in any one of the foregoing embodiments and the transmitting device described in any one of the foregoing embodiments.

The technical features in the foregoing embodiments may be randomly combined. For concise description, not all possible combinations of the technical features in the embodiment are described. However, as long as there is no contradiction in the combination of these technical features, all should be considered as falling into the scope of the specification.

The above embodiments only illustrate several implementations of the disclosure, and the descriptions thereof are specific and detailed, but they should not be understood as limiting the scope of the disclosure. It should be noted that, for those of ordinary skill in the art, several modifications and variants can be made without departing from the concept of the disclosure, and they all fall within the protection scope of the disclosure. Therefore, the protection scope of the patent of the disclosure should be subject to the appended claims.

## Claims

1. A receiving device for wireless charging, comprising at least two receiving circuits, wherein each of the at least two receiving circuits is connected to a battery of the receiving device, and each of the at least two receiving circuits comprises a receiving coil;
wherein the receiving coil is configured to generate, when being driven by an alternating magnetic field generated by a transmitting device for wireless charging, electric power and charge the battery; and
wherein while performing wireless charging by the transmitting device, the at least two receiving coils of the receiving device are configured to align at least two corresponding transmitting coils of the transmitting device, respectively.

2. The receiving device as claimed in claim 1, wherein for every two receiving coils of the receiving device, a distance between two central axes of the two receiving coils is equal to a distance between two central axes of two transmitting coils respectively corresponding to the two receiving coils.

3. The receiving device as claimed in claim 1, further comprising a rear cover;
wherein the at least two receiving coils comprises a central receiving coil, a central axis of the central receiving coil passing through a central position of the rear cover.

4. The receiving device as claimed in claim 1, further comprising a rear cover;
wherein the at least two receiving coils comprises an off-center receiving coil, no position on a central axis of the off-center receiving coil coinciding with a central position of the rear cover.

5. The receiving device as claimed in claim 1, further comprising a control circuit;
wherein a charging process of the receiving device comprises a constant current charging phase, and the control circuit is configured to control, in the constant current charging phase, all of the at least two receiving circuits of the receiving device to charge the battery; and
wherein the charging process of the receiving device further comprises a trickle charging phase and/or a constant voltage charging phase, and the control circuit is configured to control, in the trickle charging phase and/or the constant voltage charging phase, a part of the at least two receiving circuits of the receiving device to charge the battery.

6. The receiving device as claimed in claim 5, further comprising a first voltage conversion module and a second voltage conversion module;
wherein the first voltage conversion module is connected between the battery and each of the at least two receiving circuits of the receiving device, and the first voltage conversion module is configured to convert a charging voltage and/or a charging current output by each receiving circuit connected with the first voltage conversion module, and charge the battery with the converted charging voltage and/or the converted charging current; and
wherein the second voltage conversion module is connected between the battery and each of the part of the at least two receiving circuits of the receiving device, and the second voltage conversion module is configured to convert a charging voltage and/or a charging current output by each receiving circuit connected with the second voltage conversion module, and charge the battery with the converted charging voltage and/or the converted charging current.

7. The receiving device as claimed in claim 6, wherein the control circuit is configured to control, in the constant current charging phase, the first voltage conversion module to convert the charging voltage and/or the charging current output by each receiving circuit connected with the first voltage conversion module, and charge the battery with the converted charging voltage and/or the converted charging current; and
wherein the control circuit is further configured to control, in the trickle charging phase and/or the constant voltage charging phase, the second voltage conversion module to convert the charging voltage and/or the charging current output by each receiving circuit connected with the second voltage conversion module, and charge the battery with the converted charging voltage and/or the converted charging current.

8. The receiving device as claimed in claim 6, wherein each of the at least two receiving circuits further comprises an AC-to-DC conversion circuit, the AC-to-DC conversion circuit of each of the at least two receiving circuits is connected to the respective receiving coil, and is connected to at least one of the first voltage conversion module and the second voltage conversion module; and
wherein the receiving coil is configured to output, when being driven by the alternating magnetic field, an alternating current, and the AC-to-DC conversion circuit is configured to convert the alternating current output by the receiving coil connected with the AC-to-DC conversion circuit into a direct current, and output the direct current to the at least one of the first voltage conversion module and the second voltage conversion module.

9. The receiving device as claimed in claim 1, wherein at least one of the at least two receiving circuits comprises a reception-side communication circuit configured to send charging control data to the transmitting device.

10. The receiving device as claimed in claim 9, wherein the reception-side communication circuit is connected to the receiving coil of the receiving circuit where the reception-side communication circuit is located, and the reception-side communication circuit is configured to modulate and encode the charging control data, and send, with the receiving coil of the receiving circuit where the reception-side communication circuit is located, the modulated and encoded charging control data to the transmitting device.

11. The receiving device as claimed in claim 9 or 10, wherein the charging control data comprises at least one of an output voltage and an output current of the receiving circuit; or the charging control data comprises one of boost control data and buck control data.

12. The receiving device as claimed in claim 3, wherein the receiving circuit where the central receiving coil is located supports Qi standard.

13. The receiving device as claimed in claim 1, wherein the battery comprises at least two first battery cells connected in parallel, and each of the at least two receiving circuits is connected to at least one of the first battery cells of the receiving device.

14. The receiving device as claimed in claim 1, wherein the battery comprises at least two second battery cells connected in series, and each of the at least two receiving circuits is connected to the at least two second battery cells of the receiving device.

15. A transmitting device for wireless charging, comprising at least two transmitting circuits, wherein each of the at least two receiving circuits comprises a transmitting coil, and the transmitting coil is configured to generate, when being applied with an alternating current, an alternating magnetic field; and
wherein while performing wireless charging for a receiving device, the at least two transmitting coils of the transmitting device are configured to align at least two corresponding receiving coils of the receiving device, respectively.

16. The transmitting device as claimed in claim 15, wherein for every two transmitting coils of the transmitting device, a distance between two central axes of the two transmitting coils is equal to a distance between two central axes of two receiving coils respectively corresponding to the two transmitting coils.

17. The transmitting device as claimed in claim 15, further comprising a clamping member, wherein the clamping member is configured to clamp the receiving device, and when the receiving device is clamped on the transmitting device through the clamping member, for each of the at least two transmitting coils of the transmitting device, a central axis of the transmitting coil is coincident with a central axis of a respective receiving coil of the receiving device corresponding to the transmitting coil.

18. The transmitting device as claimed in claim 17, wherein the clamping member is in a groove-like structure or in a structure having a protrusion for position limiting.

19. The transmitting device as claimed in claim 15, wherein each of the at least two transmitting circuits comprises a DC-to-AC conversion circuit, and the DC-to-AC conversion circuit of each of the at least two transmitting circuits is connected to the respective transmitting coil; and
the DC-to-AC conversion circuit is configured to convert a direct current output by a direct current power supply into an alternating current, and output the alternating current to the transmitting coil connected with the DC-to-AC conversion circuit.

20. The transmitting device as claimed in claim 19, further comprising a third voltage conversion module, wherein the third voltage conversion module is connected to the DC-to-AC conversion circuit of each of the at least two transmitting circuits, the third voltage conversion module is configured to convert a voltage of the direct current output by the direct current power supply, and output the converted direct current to the DC-to-AC conversion circuit of each of the at least two transmitting circuits.

21. The transmitting device as claimed in claim 19, wherein each of the at least two transmitting circuits further comprises a fourth voltage conversion module, wherein the fourth voltage conversion module of each of the at least two transmitting circuits is connected to the respective DC-to-AC conversion circuit; and
each fourth voltage conversion module is configured to convert a voltage of the direct current output by the direct current power supply, and output the converted direct current to the DC-to-AC conversion circuit connected with the second voltage conversion module.

22. The transmitting device as claimed in claim 20, further comprising a first processing module, wherein the first processing module is connected to the third voltage conversion module and to the DC-to-AC conversion circuit of each of the at least two transmitting circuits, the first processing module is configured to control, based on charging control data sent from the receiving device, at least one of an output voltage of the third voltage conversion module, a duty cycle of the DC-to-AC conversion circuit, and an oscillation frequency of the transmitting coil.

23. The transmitting device as claimed in claim 21, further comprising a second processing module, wherein the second processing module is connected to each of the fourth voltage conversion modules and to the DC-to-AC conversion circuit of each of the at least two transmitting circuits, and a fourth processing module is configured to control, based on charging control data sent from the receiving device, at least one of an output voltage of the second voltage conversion module, a duty cycle of the DC-to-AC conversion circuit, and an oscillation frequency of the transmitting coil.

24. The transmitting device as claimed in claim 21 or 22, wherein at least one of the at least two transmitting circuits comprises a transmission-side communication circuit configured to receive charging control data sent from the receiving device.

25. The transmitting device as claimed in claim 24, wherein the transmission-side communication circuit is connected to the transmitting coil of the transmitting circuit where the transmission-side communication circuit is located, the transmitting coil is configured to receive the charging control data sent from the receiving device, and the transmission-side communication circuit is configured to demodulate and decode the received charging control data.

26. The transmitting device as claimed in any one of claims 22-25, wherein the charging control data comprises at least one of an output voltage and an output current of the receiving circuit; or the charging control data comprises one of boost control data and buck control data.

27. A wireless charging system, comprising a receiving device and a transmitting device;
wherein the receiving device comprises at least two receiving circuits, each of the at least two receiving circuits is connected to a battery of the receiving device, each of the at least two receiving circuits comprises a receiving coil, and the receiving coil is configured to generate, when being driven by an alternating magnetic field generated by a transmitting device for wireless charging, electric power and charge the battery;
wherein the transmitting device comprises at least two transmitting circuits, each of the at least two receiving circuits comprises a transmitting coil, and the transmitting coil is configured to generate, when being applied with an alternating current, the alternating magnetic field; and
wherein while performing wireless charging by the transmitting device, the at least two receiving coils of the receiving device are configured to align the at least two corresponding transmitting coils of the transmitting device, respectively.

28. The wireless charging system as claimed in claim 27, wherein for every two receiving coils of the receiving device, a distance between central axes of the two receiving coils is equal to a distance between central axes of two transmitting coils respectively corresponding to the two receiving coils.

29. The wireless charging system as claimed in claim 27, wherein the receiving device comprises a rear cover; and
wherein the at least two receiving coils comprises a central receiving coil, a central axis of the central receiving coil passing through a central position of the rear cover.

30. The wireless charging system as claimed in claim 27, wherein the receiving device comprises a rear cover; and
wherein the at least two receiving coils comprises an off-center receiving coil, no position on a central axis of the off-center receiving coil coinciding with a central position of the rear cover.

31. The wireless charging system as claimed in claim 27, wherein the transmitting device comprises a clamping member configured to clamp the receiving device, and when the receiving device is clamped on the transmitting device through the clamping member, for each of the at least two transmitting coils of the transmitting device, a central axis of the transmitting coil is coincident with a central axis of a respective receiving coil of the receiving device corresponding to the transmitting coil.

32. The wireless charging system as claimed in claim 31, wherein the clamping member is in a groove-like structure or in a structure having a protrusion for position limiting.
